Europäisches Patentamt

European Patent Office

Office européen des brevets

(19)

(11) EP 0 587 844 B1

(12) **EUROPÄISCHE PATENTSCHRIFT**

(45) Veröffentlichungstag und Bekanntmachung des Hinweises auf die Patenterteilung:
**13.05.1998 Patentblatt 1998/20**

(21) Anmeldenummer: **93906441.6**

(22) Anmeldetag: **25.03.1993**

(51) Int Cl.[6]: **G01D 3/02**, G01B 7/00,
G01D 5/22

(86) Internationale Anmeldenummer:
**PCT/DE93/00273**

(87) Internationale Veröffentlichungsnummer:
**WO 93/20409 (14.10.1993 Gazette 1993/25)**

(54) **VERFAHREN ZUR SENSORANSTEUERUNG UND SIGNALVERARBEITUNG**

SENSOR-DRIVE AND SIGNAL-PROCESSING METHOD

PROCEDE D'EXCITATION D'UN CAPTEUR ET DE TRAITEMENT DE SIGNAUX

(84) Benannte Vertragsstaaten:
**DE FR GB**

(30) Priorität: **02.04.1992 DE 4210981**

(43) Veröffentlichungstag der Anmeldung:
**23.03.1994 Patentblatt 1994/12**

(73) Patentinhaber: **Micro-Epsilon Messtechnik GmbH & Co. KG**
**D-94496 Ortenburg (DE)**

(72) Erfinder:
• **MANDL, Roland**
**D-8359 Ortenburg (DE)**
• **BAUMANN, Heinrich**
**D-8358 Vilshofen (DE)**

(74) Vertreter: **Naumann, Ulrich, Dr.-Ing. et al**
**Patentanwälte,**
**Ullrich & Naumann,**
**Luisenstrasse 14**
**69115 Heidelberg (DE)**

(56) Entgegenhaltungen:
**EP-A- 0 450 829       WO-A-86/03831**
**WO-A-89/04949       WO-A-89/08819**
**US-A- 4 590 575**

• **proc. IEEE 1989,CUSTOM INTEGRATED CIRCUITS CONFERENCE ,Town & Country Hotel San Diego,CALIFORNIA ,May 15-18,1989 pages 20.5.1-20.5.5, "A multi-channel digital demodulator for LVDT and RVDT position sensors" (F.Yassa et al)**
• **EDN ELECTRICAL DESIGN NEWS Bd. 31, Nr. 11, 29. Mai 1986, NEWTON, MASSACHUSETTS US Seiten 159 - 168 Z.RAHIM 'LVDT INTERFACE CHIP'S FUNCTIONAL BLOCKS OFFER VERSATILITY'**
• **ELECTRONIC ENGINEERING Bd. 62, Nr. 759, M rz 1990, LONDON GB Seiten 41 - 46 J.SYLVAN 'MONOLITHIC SIGNAL CONDITIONER SIMPLIFIES DISPLACEMENT SENSING'**

EP 0 587 844 B1

## Beschreibung

Die Erfindung betrifft ein Verfahren zur Sensoransteuerung und Signalverarbeitung, wobei der Sensor primärseitig mit einem oszillierenden elektrischen Eingangssignal gespeist wird und sekundärseitig das Ausgangssignal des Sensors demoduliert, ggf. gefiltert und verstärkt wird, wobei die sekundärseitige Signalaufbereitung und -verarbeitung digital mit Hilfe eines Microcontrollers mit integriertem A/D-Wandler erfolgt, wobei das Ausgangssignal mehrere Perioden hintereinander in etwa dieselbe Signalform aufweist.

Bei den anzusteuernden Sensoren kann es sich um beliebige Wegaufnehmer bzw. Wegmeßsensoren handeln. So kommen hier lineare induktive Wegaufnehmer und Meßtaster in Frage, die nach dem Differential-Transformator-Prinzip (LVDT) arbeiten. Ebenso kann es sich hier um berührungslose Wegaufnehmer auf Wirbelstrombasis, berührungslose induktive Wegaufnehmer und berührungslose kapazitive Wegaufnehmer handeln. Wesentlich ist jedenfalls, daß die Sensoren primärseitig mit einem Eingangssignal gespeist werden und daß sekundärseitig das Ausgangssignal des jeweiligen Sensors im weitesten Sinne verarbeitet bzw. aufbereitet wird.

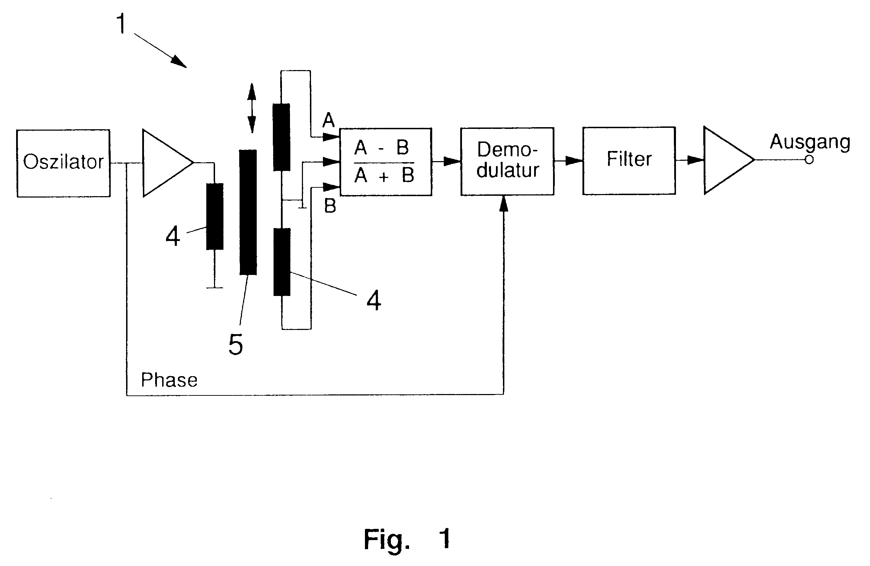

Im Falle eines LVDT-Sensors wird bei herkömmlichen Systemen die LVDT-Spule primärseitig über einen Oszillator mit einem oszillierenden Signal gespeist. Die Demodulation des sekundären Ausgangssignals der LVDT-Spule und eine oftmals erforderliche Linearitäts- und Querempfindlichkeitskompensation verursacht bei analoger Auswertung des sekundärseitigen Ausgangssignals einen erheblichen schaltungstechnischen Aufwand. Fig. 1 zeigt in einem Blockschaltbild die Prinzipschaltung einer analogen LVDT-Elektronik. Die dort dargestellte Schaltung ist in der Praxis gleich aus mehreren Gründen problematisch. So können durch die Sensorgeometrie bedingte Linearitätsfehler nicht oder nur mit großem elektronischen Aufwand kompensiert werden. Insbesondere bei LVDT-Sensoren ist das Verhältnis von Gehäuselänge zu Meßbereich durch den linearen Wegmeßbereich des Sensors ganz erheblich eingeschränkt. Schließlich sind bei analoger Signalaufbereitung einer Miniaturisierung, Kostensenkung und stabiler Ausgestaltung Grenzen gesetzt.

Aus der Literaturstelle Proc. IEEE 1989, Custom Integrated Circuits Conf., San Diego (US), 15.-18. Mai 1989, Seiten "20.5.1" bis "20.5.5" ist es bereits für sich gesehen bekannt, daß eine analoge Auswertung des Sensorausgangssignals sowohl aus Gründen der Meßgenauigkeit als auch aufgrund des schaltungstechnischen Aufwandes problematisch ist. Davon ausgehend wird vorgeschlagen, die Signalauswertung und insbesondere die Demodulation des Ausgangssignals in einer digitalen Umgebung vorzunehmen. Die Analog-Digital-Wandlung des Sensorausgangssignals wird also an den Anfang der Signalauswertung gestellt. Zur Signalauswertung wird ein Chip verwendet, auf dem neben dem Demodulator und mehreren Filtern auch ein A/D-Wandler integriert ist. Dieser A/D-Wandler nimmt eine Übertastung (Oversampling) des Ausgangssignals vor. Nach dem Shannon-schen Abstasttheorem bleibt dabei - zumindest vor der Digitalisierung der Abtastwerte - die gesamte Signalinformation erhalten.

Die Frequenz der Speisespannung eines LVDT-Sensors beträgt üblicherweise einige kHz, so daß das Ausgangssignal entsprechend dem Shannon-schen Abstasttheorem und bei Überabtastung mit mindestens 50 bis 500 kHz abgetastet werden müßte. Dazu ist aber ein spezieller, besonders leistungsfähiger A/D-Wandler mit minimaler Wandelzeit erforderlich.

Aus WO-A-89/04949 ist für sich gesehen ein Verfahren zur analogen Aufbereitung und Verarbeitung des Ausgangssignals eines LVDT-Sensors bekannt.

Der Erfindung liegt nun die Aufgabe zugrunde, das bekannte Verfahren zur Sensorsteuerung und Sensorverarbeitung so auszugestalten und weiterzubilden, daß kein spezieller A/D-Wandler zur Digitalisierung des Ausgangssignals erforderlich ist und insbesondere auch die üblicherweise in Microcontrollern integrierten A/D-Wandler verwendet werden können.

Das erfindungsgemäße Verfahren zur Sensoransteuerung und Signalverarbeitung löst die voranstehende Aufgabe durch die Merkmale des Patentanspruches 1. Danach ist das Verfahren der eingangs genannten Art derart ausgelegt, daß am Ausgang des Sensors eine Differenzspannung abgegriffen und zu diskreten Zeitpunkten digitalisiert wird, indem eine Unterabtastung mit Hilfe einer in den Microcontroller integrierten, schnellen Sample & Hold-Schaltung vorgenommen wird, wobei aus jeder Signalperiode mindestens ein Abtastwert gewonnen wird, der innerhalb der jeweiligen Periode zeitlich versetzt ist, d.h. daß Speisefrequenz und Abtastfrequenz zumindest geringfügig voneinander abweichen und daß mittels eines Algorithmus eine Signalrekonstruktion bei Unterabtastung erfolgt.

Es ist erkannt worden, daß es sich bei einem LVDT-Sensor um ein mechanisch träges System handelt, so daß in der Regel mehrere Perioden des Sensorausgangssignals im wesentlichen dieselbe Signalform aufweisen. Es ist ferner erkannt worden, daß sich das Sensorausgangssignal auch im Falle einer Unterabtastung mit hinreichender Genauigkeit rekonstruieren läßt, wenn dabei die Zusatzinformation genutzt wird, daß sich die Signalform über mehrere aufeinanderfolgende Perioden nicht wesentlich verändert. Es ist in diesem Zusammenhang schließlich noch erkannt worden, daß die Unterabtastung in möglichst vorteilhafter Weise so ausgeführt werden sollte, daß die Abtastwerte in den einzelnen Signalperioden möglichst zeitlich gegeneinander versetzt sind. Dadurch läßt sich bei Minimierung der Anzahl der erforderlichen Abtastwerte die maximale Singalinformation gewinnen.

Zur Durchführung des erfindungsgemäßen Verfahrens läßt sich nunmehr ein üblicherweise in einen Microcontroller integrierter A/D-Wandler verwenden. Dies führt zum einen zu einer Kosteneinsparung bei der Realisierung der Auswerteelektronik eines LVDT-Sensors und zum anderen zu einer möglichst kompakten Bauweise der Auswerteelektronik, was im Hinblick auf eine Miniaturisierung der Sensoranordnung immer von Vorteil ist.

Bei dem sowohl zur Sensoransteuerung als auch zur Signalaufbereitung bzw. -verarbeitung dienenden Microcontroller handelt es sich um einen Single-Chip-Microcontroller, wodurch die Baugröße der Auswerteelektronik ganz erheblich verringert ist. Gleichzeitig ist durch den quasi monolytischen Baustein eine ganz erhebliche Stabilität der Elektronik geschaffen.

Hinsichtlich einer Abstimmung zwischen primärseitigem Eingangssignal und sekundärseitigem Ausgangssignal des Sensors ist es von ganz besonderer Bedeutung, daß der Sensor mit einem von dem Microcontroller erzeugten Signal - direkt - gespeist wird. Dabei handelt es sich vorzugsweise um ein Rechtecksignal, d.h. um eine Rechteckspeisung. Zum Erzeugen des Rechtecksignals kann ein in fast allen gängigen Controllern vorhandener Timer benutzt werden. Ebenso ist es denkbar, daß das Eingangssignal durch eine den Microcontroller beaufschlagende Software erzeugt wird. Mit anderen Worten erfolgt die Speisung des Sensors nicht wie bisher über einen Oszillator, sondern über einen Rechner. Der Signalverlauf wird dann durch eine entsprechende Software vorgegeben.

Da am Ausgang des Sensors eine Differenzspannung abgreifbar ist, wird diese mit einem in dem Microcontroller integrierten A/D-Wandler zu diskreten Zeitpunkten digitalisiert. Dazu sind nach dem Shannon'schen Abtasttheorem bei Rechtecksignalen je nach Genauigkeit mindestens einige 10 bis 100 Abtastwerte zur Rekonstruktion des Signals erforderlich. Da die Speisefrequenz des Sensors einige kHz betragen soll, müßte die Abtastung mit mindestens 50 bis 500 kHz durchgeführt werden. Dies ist jedoch mit den üblicherweise in einem Microcontroller integrierten A/D-Wandlern nicht möglich, zumal diese meist nur eine minimale Wandelzeit von etwa 100 s bzw. 10 kHz aufweisen.

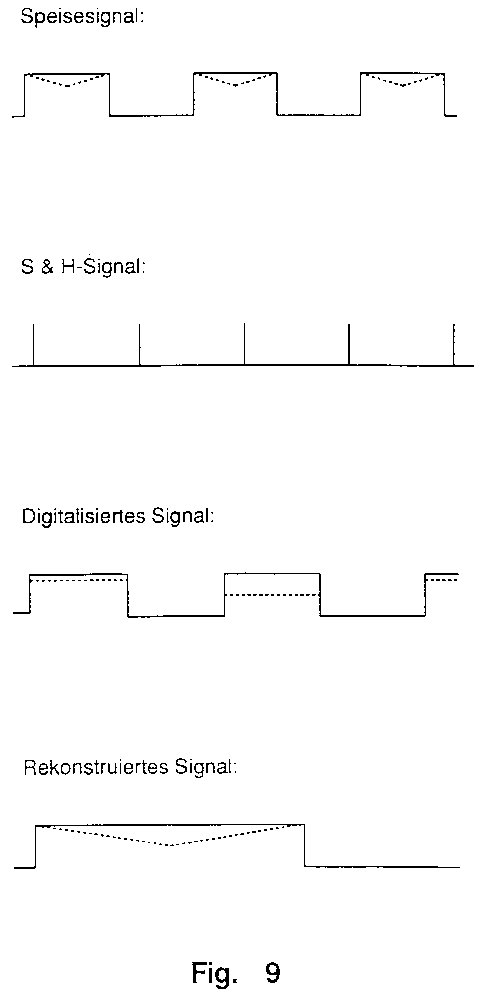

Sofern nun mehrere Perioden hintereinander im wesentlichen dieselbe Signalfolge auftritt - was bei mechanisch trägen Systemen wie bei einem LVDT-Stössel praktisch immer der Fall ist -, kann mittels eines Algorithmus eine Signalrekonstruktion - Signalform und Amplitude - bei sog. Unterabtastung erfolgen (vgl. Fig. 9). Dabei kann sogar mit einem langsamen A/D-Wandler die komplette Signalform und Amplitude rekonstruiert werden.

Sofern der vorhandene A/D-Wandler mehrere Abtastwerte je Signalperiode wandeln kann, können die Werte verschachtelt aufgenommen bzw. abgelegt werden, so daß innerhalb einiger Perioden die komplette Signalform oder zumindest die zur Demodulation relevanten Teile der Signalform rekonstruiert wird bzw. werden.

Zur Demodulation könnte in weiter vorteilhafter Weise die Fourier-Analyse zugrundegelegt werden. Ebenso wäre es denkbar, daß der Demodulation eine Differenz aus Amplitudensummenwerten zugrundelegt wird. Dazu werden die beiden Teilsummen der Amplitudenwerte

$$s_{1,2} = \sum_{j=i_1}^{i_2} u_j \quad , \quad s_{3,4} = \sum_{j=i_3}^{i_4} u_j$$

gebildet und voneinander subtrahiert.

$$d = s_{1,2} - s_{3,4}$$

Der Demodulationswert d ist damit auf einem Periodenintervall definiert und entspricht im Falle von

$$i_1 = 0, \ i_2 = i_3 = \frac{T}{2}, \ i_4 = T$$

einer analogen Demodulation. Bei einer Einschränkung der Indexbereiche lassen sich evtl. auf dem Signal vorhandene Ein- oder Überschwinger vorteilhaft ausblenden. Diese Art der Demodulation ist einer analogen Demodulation je nach Signalform mindestens gleichwertig, meist jedoch ganz erheblich überlegen. Hinsichtlich der Abtastzeitpunkte ist es von ganz erheblichem Vorteil, wenn die sekundärseitigen Abtastzeitpunkte mit der primärseitigen Signalerzeugung synchronisiert werden, so daß eine Synchrondemodulation möglich ist. Phasenverschiebungen im Übertragungswege lassen sich durch die Wahl der Indizes ausgleichen.

Die vorliegende digitale Demodulation gestattet vor allem durch die Möglichkeit einer Verwürfelung der Abtastzeitpunkte die annähernd zeitgleiche Abtastung mehrerer Eingangssignale. Durch Verhältnisbildung der Differenzterme bzw. Demodulationswerte d kann bei Sensoren mit Viertel-, Halb- oder Vollbrückenaufbau eine Kompensation von Störgrößen und Querempfindlichkeiten, bspw. durch Speise- oder Referenzspannungsmessung, erreicht werden. Folglich ist das erfindungsgemäße Verfahren auch für eine Vielzahl ähnlicher Anwendungen geeignet, bei denen eine Verhältnisbildung vorteilhaft ist.

Handelt es sich bei dem Sensor um einen kapazitiv oder resistiv arbeitenden Füllstandssensor, so können Einflüsse durch die Dielektrizitätskonstante oder den Leitwert der Flüssigkeit in Abhängigkeit von der Temperatur oder elektrochemischen Eigenschaften der Flüssigkeit kompensiert werden. Zwei Meßelektroden mit der Länge des gewünschten Meßbereichs dienen dabei zur Messung der Eintauchtiefe. Eine dritte Elektrode, die zum Zeitpunkt der Messung bereits in die Flüssigkeit eingetaucht ist, wird zur Quotientenbildung verwendet. Damit ist das Ausgangssignal nur noch vom Füllstand abhängig.

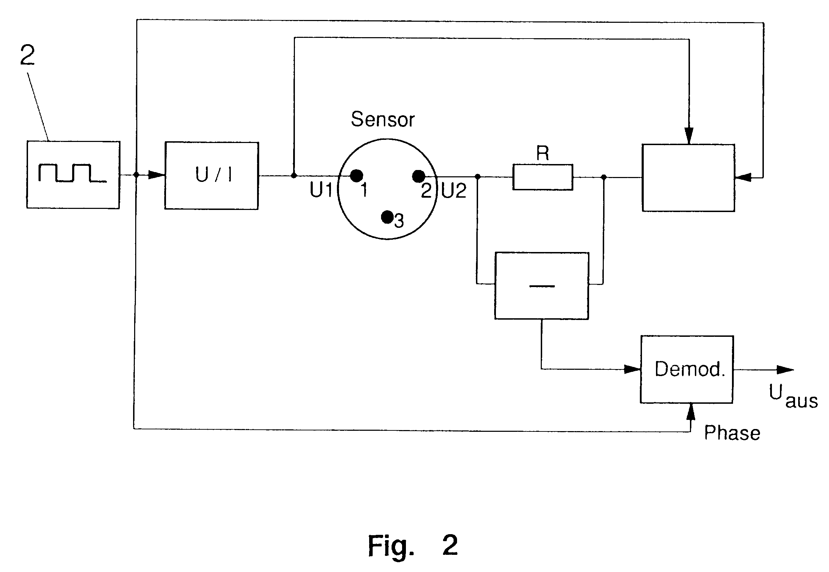

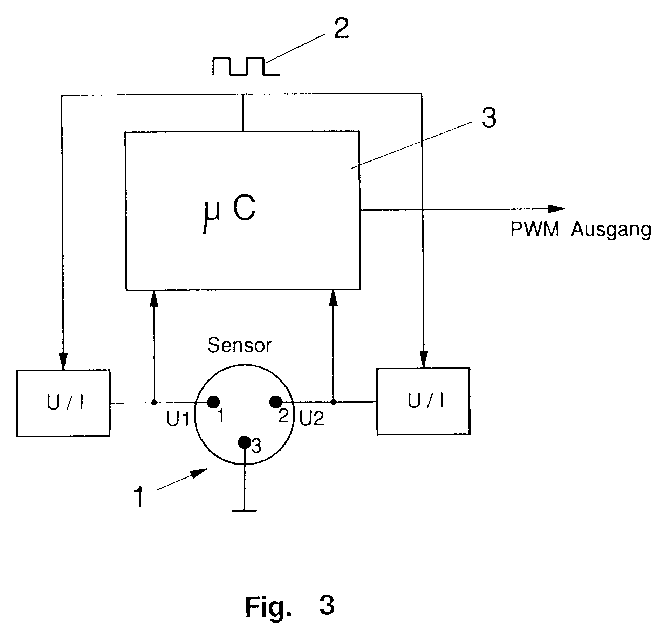

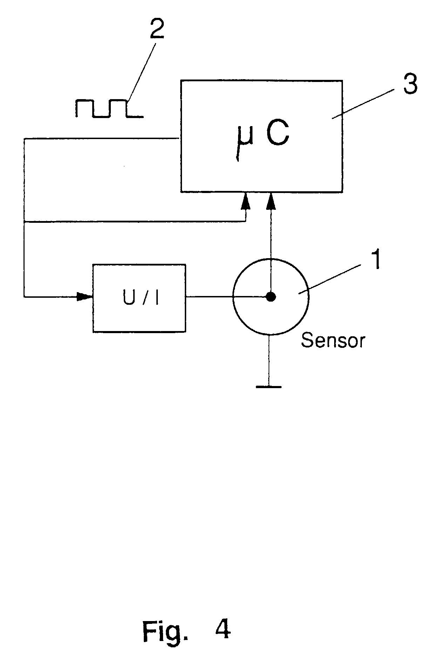

Fig. 2 zeigt in einem Blockschaltbild einen resistiven oder kapazitiven Füllstandssensor, dessen Ausgangssignal analog aufbereitet wird. Die Fig. 3 und 4 zeigen in einem Blockschaltbild einen resistiven oder kapazitiven Füllstandssensor, dessen Ausgangssignal digital aufbereitet wird. Mit dem in Fig. 4 dargestellten Sensor findet keine Leitwertkompensation statt.

Bei dem in den Fig. 3 und 4 gezeigten Füllstandssensor werden die Einflüsse durch die Dielektrizitätskonstante oder den Leitwert der Flüssigkeit in Abhängigkeit von der Temperatur oder elektrochemischen Eigenschaften der Flüssigkeit kompensiert. Fehler durch Instabilitäten der Oszillatoramplitude werden durch gleichzeitige Demodulation der Oszillatoramplitude und Verhältnisbildung eliminiert. Bei Viertel- oder Halbbrücken kann damit der Einfluß der Speiseamplitude reduziert werden. Das erfindungsgemäße Verfahren läßt sich bspw. auch bei sonstigen kapazitiven oder induktiven Sensoren anwenden. Fehler des A/D-Wandlers (R2R- oder PWM-Ausgang) können durch Messung der Ausgangsamplitude kompensiert werden. Durch Messung der Versorgungsspannung der Baugruppe können Abhängigkeiten der Speisung von Viertelbrücken kompensiert werden. Dies ist besonders dann vorteilhaft, wenn keine Verhältnisbildung von zwei demodulierten Rechtecksignalen möglich ist.

Des weiteren ist es nach dem erfindungsgemäßen Verfahren von ganz besonderem Vorteil, daß das Verhältnis von Baulänge zu Meßbereich um den Faktor 1,5 bis 7 verbessert werden kann. Eine interne Linearisierung läßt sich durch Approximation der Fehlerkurve mittels eines Approximationspolynoms durchführen und erlaubt eine Verbesserung des Verhältnisses von Baulänge zu Meßbereich um den Faktor 1,5 bis 3. Die benötigten Polynomkoeffizienten können in einem nicht flüchtigen Speicher des Microcontrollers oder in besonders vorteilhafter Weise auch im Sensor selbst z.B. als ohmsche Widerstände codiert werden. Damit ist sogar eine Austauschbarkeit von Sensor und Elektronik gewährleistet. Das Abfragen der Widerstände über den A/D-Wandler kann z.B. gleichspannungsgekoppelt erfolgen, während der Sensor im Betrieb wechselspannungsgekoppelt arbeitet.

Durch eine Anordnung von mehr als drei Spulen hintereinander und eine Umschaltung des messenden Spulentripels - abhängig von der detektierten Kernposition eines LVDT-Sensors - kann das Verhältnis von Baulänge zu Meßbereich weiter verbessert werden. Da die Auflösung innerhalb eines Tripels konstant bleibt, wird damit auch gleichzeitig die Genauigkeit bezogen auf den Gesamtmeßbereich wesentlich verbessert.

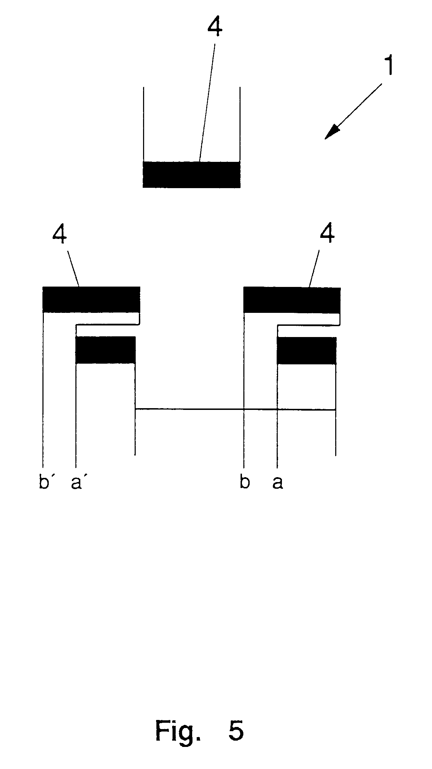

Wird eine Auflösungserhöhung nur in der Mitte des möglichen Meßbereichs gewünscht, so kann dies durch eine Teilung der Referenzspannung, bspw. um den Faktor 2, erreicht werden. Der Aussteuerbereich des A/D-Wandlers wird damit immer optimal genutzt. Die Auflösung des Systems läßt sich somit in der Mitte des Meßbereichs dynamisch erhöhen. Dieser Effekt kann aber auch durch eine etwas aufwendigere Umschaltung der Spulenwicklung erreicht werden. Dazu können die beiden außen liegenden Spulen auch mit einfacher bzw. doppelter Windungszahl ausgeführt sein. In der Mitte des Meßbereichs wird dann auf den Spulensatz mit bspw. doppelter Windungszahl umgeschaltet. Hierzu wird insbesondere auf Fig. 5 betreffend die Auflösungserhöhung in Meßbereichsmitte verwiesen.

Die zuvor bereits erwähnte Verwendung einer Approximationsfunktion zur Fehlerkompensation ermöglicht im Zusammenhang mit der Busfähigkeit des Microcontrollers eine vollautomatische Kalibrierung und Linearisierung des Aufnehmers. Mit einer rechnergesteuerten Kalibriereinrichtung könnten die erforderlichen Polynomkoeffizienten errechnet und direkt auf die Sensorelektronik übertragen werden. Bei einer Codierung im Sensor, bspw. mit Widerständen, kann dies vollautomatisch mittels eines Laserabgleichs erfolgen.

Durch Realisierung des erfindungsgemäßen Verfahrens zur Sensoransteuerung und Signalverarbeitung lassen sich aufwendige und teure Komponenten wie bspw. der Oszillator, der Demodulator, ein Dividierer, etc., die bisher in der Analogtechnik zwingend erforderlich waren, durch einen äußerst billigen und weitverbreiteten Microcontroller ersetzen. Die verbleibenden Analogkomponenten, bspw. der A/D-Wandler und D/A-Wandler, sind meist bereits im Controller integriert, so daß so gut wie keine externen analogen Bauteile mehr erforderlich sind. Somit ist eine "Ein-Chip-Lösung" realisiert. Dadurch ergeben sich nicht nur ganz erhebliche Preisvorteile bei der Realisierung der nach dem erfindungsgemäßen Verfahren betriebenen Sensoren, sondern auch ein ganz erheblich reduzierter Platzbedarf der Elektronik, so daß eine abermalige Miniaturisierung möglich ist.

In Verbindung mit der Erläuterung der Erfindung anhand der Zeichnung werden auch bevorzugte Ausgestaltungen und Weiterbildungen erläutert. In der Zeichnung zeigt

Fig. 1 in einem Blockschaltbild die Prinzipschaltung einer analogen LVDT-Elektronik,

Fig. 2 in einem Blockschaltbild einen resistiven oder kapazitiven Füllstandssensor, dessen Ausgangssignal analog aufbereitet wird,

Fig. 3 in einem Blockschaltbild einen resistiven oder kapazitiven Füllstandssensor, dessen Ausgangssignal in erfindungsgemäßer Weise digital aufbereitet wird,

Fig. 4 in einem Blockschaltbild einen resistiven Füllstandssensor ohne Leitwertkompensation, dessen Ausgangssignal in erfindungsgemäßer Weise digital aufbereitet wird,

Fig. 5 in einem Blockschaltbild, schematisch, die Auflösungserhöhung in Meßbereichsmitte,

Fig. 6 in einem Blockschaltbild, schematisch, eine Meßbereichserweiterung mit Mehrspulensystem,

Fig. 7 in einem Blockschaltbild, schematisch, eine digitale LVDT-Elektronik,

Fig. 8 in einem Blockschaltbild, schematisch und im Detail, die digitale LVDT-Elektronik aus Fig. 7,

Fig. 9 in einer schematischen Darstellung das Taktschema der Unterabtastung,

Fig. 10 in einer graphischen Darstellung die digitale Demodulation mit diskreten Abtastwertepunkten und

Fig. 11 in einer schematischen Darstellung das Timing der Interruptroutinen.

Die Fig. 3, 4, 7 und 8 zeigen jeweils in einem Blockschaltbild digitale Elektroniken zur Anwendung des erfindungsgemäßen Verfahrens. Konkret zeigen die Fig. 3 und 4 einen resistiven Füllstandssensor 1 mit und ohne Leitwertkompensation. Die Sensoren 1 werden primärseitig mit einem Rechtecksignal 2 gespeist. In erfindungsgemäßer Weise erfolgt die sekundäre Signalaufbereitung und -verarbeitung digital. Sowohl die Sensoransteuerung als auch die Signalaufbereitung bzw. -verarbeitung erfolgt mittels eines Microcontrollers 3. Bei dem Microcontroller 3 handelt es sich um einen Single-Chip-Microcontroller, was aus den Darstellungen in den Fig. 3, 4, 7 und 8 ohne weiteres hervorgeht.

Fig. 5 zeigt in einem Blockschaltbild die Auflösungserhöhung in der Mitte des möglichen Meßbereichs. Dabei wird eine Teilung der Referenzspannung, bspw. um den Faktor 2, erreicht. Die beiden außen liegenden Spulen 4 sind mit einfacher bzw. doppelter Windungszahl ausgeführt. In der Mitte des Meßbereichs wird dann auf den Spulensatz mit doppelter Windungszahl umgeschaltet.

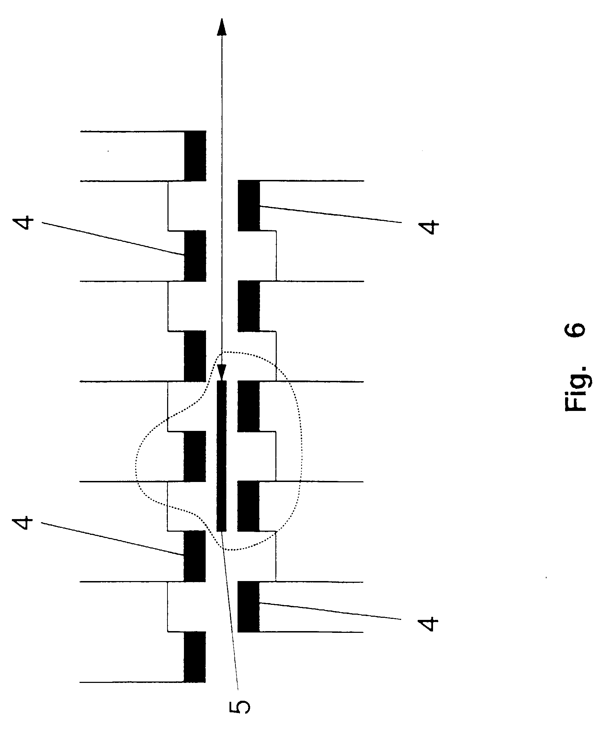

In Fig. 6 ist eine Meßbereichserweiterung mit Mehrspulensystem dargestellt. Durch die Anordnung mehrerer Spulen 4 hintereinander und durch eine Umschaltung des messenden Spulentripels abhängig von der detektierten Position des Kerns 5 kann das Verhältnis von Baulänge zu Meßbereich weiter verbessert werden. Wie bereits zuvor erwähnt, bleibt hier die Auflösung eines Tripels konstant, so daß auch gleichzeitig die Genauigkeit bezogen auf den Gesamtmeßbereich erheblich verbessert wird.

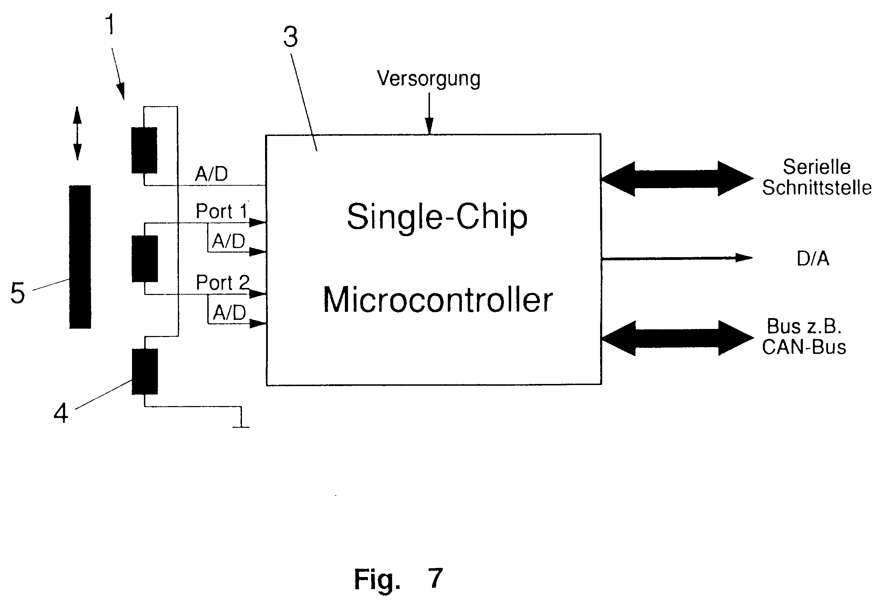

Fig. 7 zeigt in einem Blockschaltbild eine digitale LVDT-Elektronik, wobei der Microcontroller 3 den Sensor 1 mit einem Rechtecksignal beaufschlagt. Gleichermaßen wird dort die Signalaufbereitung und Signalverarbeitung durchgeführt.

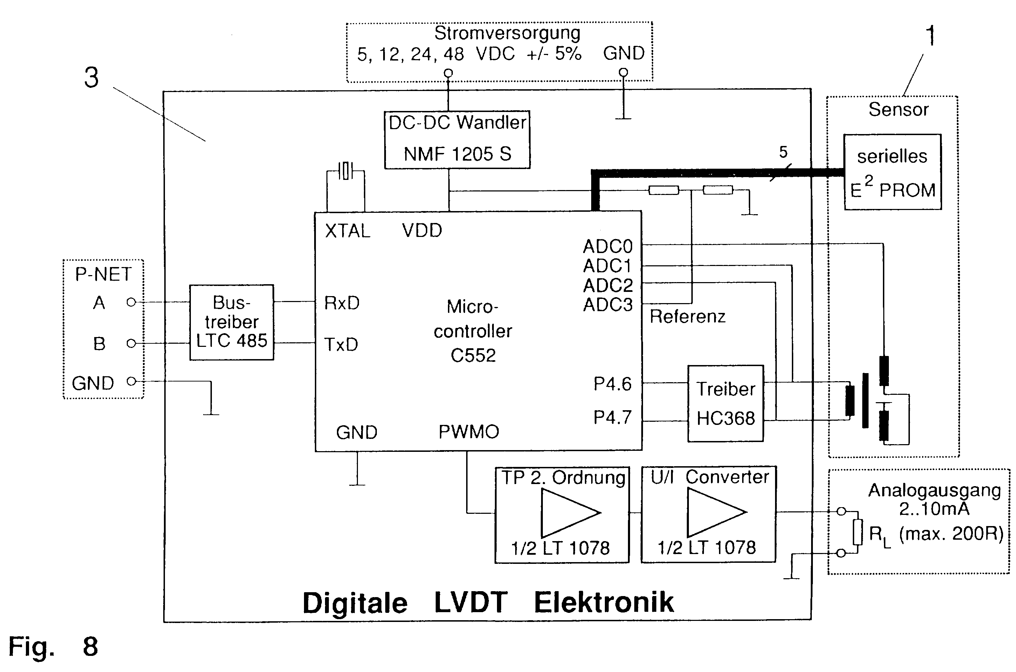

Fig. 8 zeigt die digitale LVDT-Elektronik in detaillierter Darstellung. Einzelheiten lassen sich der in Rede stehenden Figur entnehmen.

In Fig. 9 ist ein Taktschema der Unterabtastung schematisch dargestellt, wobei sich das Speisesignal, das Sample & Hold-Signal, das digitalisierte Signal und das rekonstruierte Signal entnehmen läßt. Dabei ist wesentlich, daß bei bekannter Bezugsphase durch gezielte Verletzung des Abtasttheorems ein langsamerer A/D-Wandler eingesetzt werden kann (< 10 kHz Wandlungsrate bei 5 kHz Rechtecksignalfrequenz).

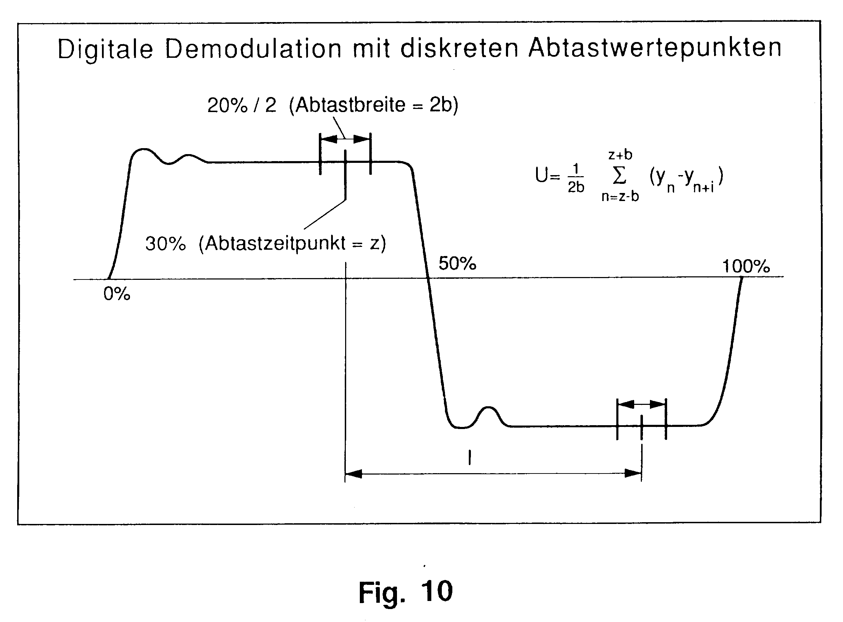

Die digitale Demodulation gemäß der Darstellung in Fig. 10 erfolgt dadurch, daß eine Periode des unterabgetasteten Signals in eine Fourier-Reihe bis zum Koeffizienten k entwickelt wird. Aus den Koeffizienten

$$c_k = \sum_{n=1}^{N} y_n * \cos[2*PI*n*f_k/N]$$

läßt sich die Signalenergie aus den spektralen Koeffizienten nach der Formel

$$E_y = 1/2 \sum_{k=1}^{K} (c_k{}^2 + s_k{}^2)$$

berechnen, wobei

N = Stützpunktzahl des unterabgetasteten Signals
M = Stützpunktzahl des nach dem Abtasttheorem gesampelten S.
K = Zahl der Koeffizienten
u = ursprüngliches Signal
y = unterabgetastetes Signal.

Ein Vergleich mit der integral berechneten Energie

$$E_u = 1/M \sum_{m=1}^{M} (u_m{}^2)$$

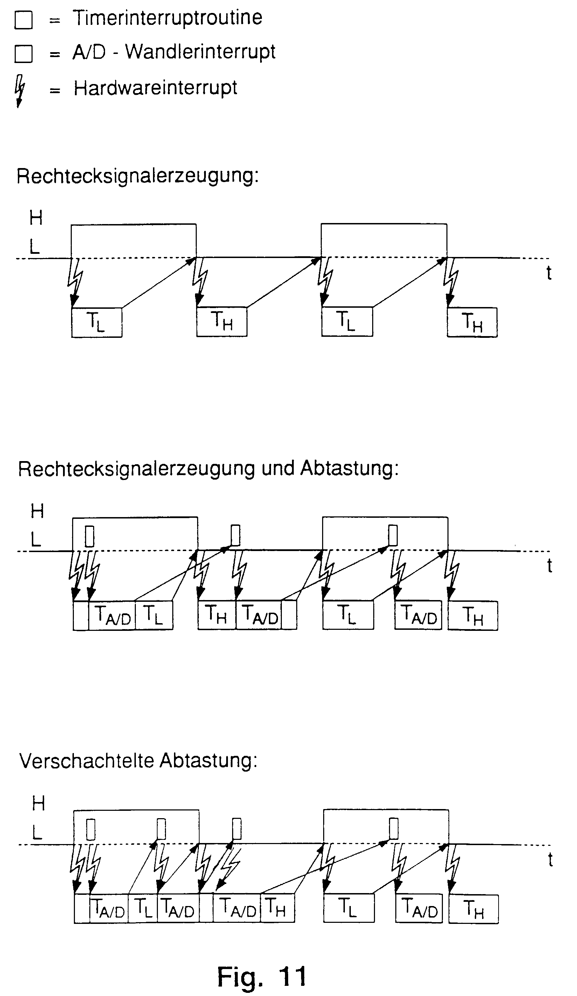

des Ausgangssignals ergibt selbst bei Rechtecksignalen mit starken Überschwingern nur Abweichungen im Promillebereich. Dies läßt auf brauchbare Resultate in der Praxis hoffen. Durch Begrenzen der Koeffizientenentwicklung auf einige Werte läßt sich der Einfluß von höherfrequenten Spektralanteilen im Signal dämpfen, so daß hier Störungen bereits weitgehend unterdrückt werden können (Tiefpaßfilterung).
Schließlich zeigt Fig. 11 das Timing der Interruptroutinen. Die Darstellung ist selbsterklärend.

**Patentansprüche**

1. Verfahren zur Sensoransteuerung und Signalverarbeitung, wobei der Sensor primärseitig mit einem oszillierenden elektrischen Eingangssignal gespeist wird und sekundärseitig das Ausgangssignal des Sensors demoduliert, ggf. gefiltert und verstärkt wird, wobei die sekundärseitige Signalaufbereitung und -verarbeitung digital mit Hilfe eines Microcontrollers mit integriertem A/D-Wandler erfolgt, wobei das Ausgangssignal mehrere Perioden hintereinander in etwa dieselbe Signalform aufweist,
**dadurch gekennzeichnet**, daß am Ausgang des Sensors eine Differenzspannung abgegriffen und zu diskreten Zeitpunkten digitalisiert wird, indem eine Unterabtastung mit Hilfe einer in den Microcontroller integrierten, schnellen Sample & Hold-Schaltung vorgenommen wird, wobei aus jeder Signalperiode mindestens ein Abtastwert gewonnen wird, der innerhalb der jeweiligen Periode zeitlich versetzt ist, d.h. daß Speisefrequenz und Abtastfrequenz zumindest geringfügig voneinander abweichen und daß mittels eines Algorithmus eine Signalrekonstruktion bei Unterabtastung erfolgt.

2. Verfahren nach Anspruch 1, dadurch gekennzeichnet, daß der Sensor mit einem von dem Microcontroller erzeugten Rechtecksignal gespeist wird.

3. Verfahren nach Anspruch 1 oder 2, dadurch gekennzeichnet, daß zur Erzeugung des Eingangssignals ein im Microcontroller ausgebildeter Timer verwendet wird oder daß das Eingangssignal durch eine den Microcontroller beaufschlagende Software erzeugt wird.

4. Verfahren nach einem der Ansprüche 1 bis 3, wobei der A/D-Wandler mehrere Abtastwerte je Periode wandeln kann, dadurch gekennzeichnet, daß die Abtastwerte verschachtelt abgelegt werden, so daß zumindest die zur Demodulation relevanten Teile der Signalform rekonstruiert werden.

5. Verfahren nach einem der Ansprüche 1 bis 4, dadurch gekennzeichnet, daß der Demodulation die Fourier-Analyse oder eine Differenz aus Amplitudensummenwerten zugrundegelegt wird.

6. Verfahren nach einem der Ansprüche 1 bis 5, dadurch gekennzeichnet, daß die sekundärseitigen Abtastzeitpunkte zur Synchrondemodulation mit der primärseitigen Signalerzeugung synchronisiert werden.

7. Verfahren nach einem der Ansprüche 1 bis 6, dadurch gekennzeichnet, daß bei Sensoren mit Halb- oder Vollbrük-kenaufbau durch Verhältnisbildung der Demodulationswerte eine Kompensation von Störgrößen und Querempfindlichkeiten, beispielsweise durch Speise- oder Referenzspannungsmessung, erreicht wird, wobei die Fehlerkompensation mittels einer Approximationsfunktion erfolgt.

8. Verfahren nach einem der Ansprüche 1 bis 7, wobei es sich bei dem Sensor um einen kapazitiv oder resistiv arbeitenden Füllstandsmesser handelt, dadurch gekennzeichnet, daß Einflüsse durch die Dielektrizitätskonstante oder den Leitwert der Flüssigkeit in Abhängigkeit von der Temperatur oder elektrochemischen Eigenschaften der Flüssigkeit kompensiert werden, wobei eine Fehlerkompensation mittels einer Approximationsfunktion erfolgt.

9. Verfahren nach einem der Ansprüche 1 bis 8, dadurch gekennzeichnet, daß mit einer rechnergestützten Kalibriereinrichtung erforderliche Polynomkoeffizienten errechnet und direkt an die Sensorelektronik übertragen werden.

## Claims

1. Method of driving a sensor and processing a signal, wherein on the primary side the sensor is supplied with an oscillating electrical input signal and on the secondary side the output signal of the sensor is demodulated, if need be, filtered and amplified, wherein the signal conditioning and processing on the secondary side occurs in digital form by means of a microcontroller with an integrated analog-to-digital converter and wherein the output signal has the same sequence of signals for several successive periods,
   **characterized** in that the output of the sensor is adapted for pickup of a differential voltage, wherein the differential voltage is digitized at discrete instants of time, wherein an undersampling is executed with a fast-acting sample and hold circuit being integrated in the microcontrolller, wherein from each signal period at least one sampling value is obtained, which is time shifted within the respective period, i.e. the input frequence and sampling sequence differ at least with a minimum amount and wherein a reconstruction of the signal is executed in an undersampling with means of an algorithm.

2. Method as in claim 1, characterized in that the sensor is supplied with a square-wave signal generated by the microcontroller.

3. Method as in claim 1 or 2, characterized in that a timer provided in the microcontroller is used to generate the input signal being generated by a software controlling the microcontroller.

4. Method as in one of claims 1-3, wherein the analog-to-digital converter is capable of converting several sampling values per period, characterized in that the sampling values are stored in nested form, so that at least portions of the signal shape relevant for the demodulation are reconstructed.

5. Method as in one of claims 1-4, characterized in that the demodulation is based on the Fourier analysis or on a difference of summed up amplitude values.

6. Method as in one of claims 1-5, characterized in that the sampling instants of time on the secondary side are synchronized with the signal generation on the primary side, so as to permit a synchronous demodulation.

7. Method as in one of claims 1-6, characterized in that the ratio formation of the demoduliation values, in particular in the case of sensors with half or full bridge configurations, allows to achieve a compensation for noise variables and transverse sensitivities, for example, by measuring the supply or reference voltage.

8. Method as in one of claims 1-7, wherein the sensor is a level sensor operating by capacitance or resistivity, characterized in that the influences caused by the dielectric constant or the conductance of the fluid are compensated as a function of temperature or electrochemical properties of the fluid, wherein the error compensation occurs by means of an approximation function.

9. Method as in one of claims 1-8, characterized in that necessary polynomial coefficients are calculated with a computer-assisted calibration device and transmitted preferably directly to the sensor electronics.

**Revendications**

1. Procédé d'excitation d'un capteur et traitement de signaux, où le capteur est, côté primaire, alimenté par un signal d'entrée électrique oscillant et où, côté secondaire, le signal de sortie du capteur est démodulé, le cas échéant est filtré et amplifié, et où la préparation et le traitement côté secondaire du signal ont lieu par voie digitale à l'aide d'un micro-contrôleur et d'un transformateur A/C intégré, où le signal de sortie présente plusieurs périodes de forme sensiblement identique,
caractérisé à ce qu'à la sortie du capteur est prélevée une tension différentielle et est digitalisée à des instants discrets, par le fait qu'un sous-échantillonnage est réalisé à l'aide d'un circuit rapide Echantillon & maintien intégré dans le micro-contrôleur, où à chaque période de signal est obtenue une valeur d'échantillonnage qui au sein de la période en question est décalée dans le temps, ce qui veut dire que la fréquence d'alimentation et la fréquence d'échantillonnage diffèrent légèrement l'une de l'autre, et en ce qu'au moyen d'un algorithme est effectuée une reconstruction du signal lors du sous-échantillonnage.

2. Procédé suivant la revendication 1, caractérisé en ce que le capteur est alimenté par un signal rectangulaire produit par le micro-contrôleur.

3. Procédé suivant la revendication 1 ou 2, caractérisé en ce que pour la production du signal d'entrée est utilisé un dispositif de minutage intégré dans le micro-contrôleur ou en ce que le signal d'entrée est produit par un logiciel agissant sur le micro-contrôleur.

4. Procédé suivant l'une quelconque des revendications de 1 à 3, où le transformateur A/C permet de transformer plusieurs valeurs d'échantillonnage par période, caractérisé en ce que les valeurs d'échantillonnage sont déposées de manière entrelacée, de telle sorte que sont au moins reconstruites les parties de la forme du signal relevant de la démodulation.

5. Procédé suivant l'une quelconque des revendications de 1 à 4, caractérisé en ce que la démodulation est faite sur la base de l'analyse de Fourier ou sur la base d'une différence de sommations de valeurs d'amplitude.

6. Procédé suivant l'une quelconque des revendications de 1 à 5, caractérisé en ce que les instants d'échantillonnage côté secondaire sont, aux fins d'une démodulation synchrone, synchronisés avec la production de signal côté primaire.

7. Procédé suivant l'une quelconque des revendications de 1 à 6, caractérisé en ce que dans le cas de capteurs à structure en demi-pont ou en pont, il est obtenu, par formation de rapports des valeurs de démodulation, une compensation des grandeurs perturbatrices et des sensibilités transversales, par exemple à l'aide d'une mesure de la tension d'alimentation ou d'une tension de référence, où a lieu une compensation d'erreurs au moyen d'une fonction d'approximation.

8. Procédé suivant l'une quelconque des revendications de 1 à 7, où le capteur est une jauge de liquide à fonctionnement capacitif ou par résistivité, caractérisé en ce que les influences dues à la constante diélectrique ou à la conductivité du liquide sont compensées en fonction de la température ou de propriétés électrochimiques du liquide, une compensation d'erreurs ayant lieu au moyen d'une fonction d'approximation.

9. Procédé suivant l'une quelconque des revendications de 1 à 8, caractérisé en ce qu'à l'aide d'n dispositif de calibrage commandé par ordinateur sont calculés les coefficients de polynôme nécessaires qui sont directement transmis à l'électronique du capteur.

Oszilator

1

Phase

Filter

Demodulatur

$$\frac{A - B}{A + B}$$

A

B

4

5

4

Ausgang

Fig. 1

Fig. 2

EP 0 587 844 B1

Fig. 3

**Fig. 4**

Fig. 5

Fig. 6

**Fig. 7**

EP 0 587 844 B1

**Digitale LVDT Elektronik**

Fig. 8

Speisesignal:

S & H-Signal:

Digitalisiertes Signal:

Rekonstruiertes Signal:

# Fig. 9

Digitale Demodulation mit diskreten Abtastwertepunkten

20% / 2  (Abtastbreite = 2b)

$$U = \frac{1}{2b} \sum_{n=z-b}^{z+b} (y_n - y_{n+i})$$

30%  (Abtastzeitpunkt = z)

0%

50%

100%

**Fig. 10**

EP 0 587 844 B1

☐ = Timerinterruptroutine

☐ = A/D - Wandlerinterrupt

⚡ = Hardwareinterrupt

Rechtecksignalerzeugung:

Rechtecksignalerzeugung und Abtastung:

Verschachtelte Abtastung:

Fig. 11